(19) **Europäisches Patentamt**

**European Patent Office**

**Office européen des brevets**

(11) Veröffentlichungsnummer: **0 356 879 B1**

# (12) EUROPÄISCHE PATENTSCHRIFT

(45) Veröffentlichungstag der Patentschrift: **02.12.92**

(21) Anmeldenummer: **89115444.5**

(22) Anmeldetag: **22.08.89**

(51) Int. Cl.5: **C02F 3/28**, C02F 3/12, B01J 8/22

Die Akte enthält technische Angaben, die nach dem Eingang der Anmeldung eingereicht wurden und die nicht in dieser Patentschrift enthalten sind.

(54) **Wirbelbettreaktor zur biologischen Abwasserreinigung.**

(30) Priorität: **02.09.88 DE 3829873**

(43) Veröffentlichungstag der Anmeldung:
**07.03.90 Patentblatt 90/10**

(45) Bekanntmachung des Hinweises auf die Patenterteilung:
**02.12.92 Patentblatt 92/49**

(84) Benannte Vertragsstaaten:
**AT CH DE FR GB IT LI NL SE**

(56) Entgegenhaltungen:
EP-A- 0 112 095
EP-A- 0 250 998
WO-A-80/01484
FR-A- 1 107 499

(73) Patentinhaber: **BAYER AG**

**W-5090 Leverkusen 1 Bayerwerk(DE)**

(72) Erfinder: **Henzler, Hans-Jürgen, Dr.**
**Eggenweg 30**
**W-5650 Solingen(DE)**
Erfinder: **Kauling, Jörg, Dipl.-Ing.**
**Hendelstrasse 53**
**W-5000 Köln(DE)**
Erfinder: **Edler, Jörg, Dipl.-Ing.**
**Nievenheimerstrasse 6a**
**W-5000 Köln 60(DE)**
Erfinder: **Pascik, Imre, Dr.**
**Wilmersdorfer Strasse 6**
**W-4019 Monheim(DE)**

EP 0 356 879 B1

## Beschreibung

Die Erfindung betrifft einen Wirbelbettreaktor zur biologischen Reinigung von Abwasser mit Trägerpartikeln für Biokatalysatoren, Begasungseinheiten sowie mit einem Rückhaltesystem für die Trägerpartikel.

Bei der Abwasserreinigung werden zur Aktivitätserhöhung in zunehmendem Maße Trägerkörper für die Mikroorganismen verwendet. Als Reaktoren kommen Festbett- und Wirbelbettreaktoren zum Einsatz. In Festbettreaktoren werden durch einen sich natürlich einstellenden unregelmäßigen Bewuchs nur ein Teil des Reaktorraumes genutzt. Außerdem ist im Festbett die Einhaltung gleichmäßiger Verfahrensbedingungen (wie z.B. pH-Wert) nicht gegeben. Bei Konzentrationsschwankungen im Zulauf wird wegen mangelnder Durchmischung die Pufferwirkung einer submersen Biologie nicht voll genutzt.

Für die Abwasserreinigung sind daher gut durchmischte Wirbelbettreaktoren, in denen die Träger für die Mikroorganismen suspendiert sind oder zeitweilig suspendiert werden, besser geeignet. Das Aufwirbeln wird durch Umpumpen von Flüssigkeit, durch Rührer oder durch Begasung der Flüssigkeit erreicht. Beim Umpumpen oder Rühren der Flüssigkeit besteht der Nachteil, daß das Abwasser und die Trägerpartikel mit den Antriebsaggregaten in Berührung kommen können. Die Trägerpartikel werden dadurch einer intensiven mechanischen Belastung ausgesetzt, was langfristig zu ihrer Zerstörung führen kann. Um dies zu verhindern, müssen zusätzliche Siebe zur Feststoffrückhaltung eingebaut werden.

Wirbelbettreaktoren für die biologische Abwasserreinigung sind z.B. in EP A1 112 095 und EP A2 250 998 beschrieben. Bei einer speziellen Ausführung des Wirbelbettreaktors gemäß EP A1 112 095 ist der Reaktor in zwei getrennte Becken unterteilt, wobei in jedem Becken eine Umlaufströmung erzeugt wird. Die beiden voneinander durch eine Trennwand abgeschirmten Strömungen stehen nicht miteinander in Wechselwirkung.

Bei dem in EP A2 250 998 beschriebenen Wirbelbettreaktor erfolgt die Begasung durch segmentförmige Rohrabschnitte mit Gasaustrittsöffnungen am Boden des Reaktors, die alternierend oder umlaufend mit Gas beaufschlagt werden. Als Folge der Begasung bildet sich eine Zirkulationsströmung aus, wobei es einseitig zu einer Anhäufung und Ablagerung von Trägerkörpern auf dem Boden kommt. Bei der Umschaltung der Begasung auf ein anderes Segment erfolgt zwar eine Umschichtung des sedimentierten Trägerkörpers; es verbleiben aber Bereiche, die von der Umschichtung nicht oder nur unvollständig erfaßt werden.

Dies hat bei ungünstigen Betriebsbedingungen zur Folge, daß ein Teil der auf den Trägerkörpern immobilisierten Mikroorganismen nicht mehr mit Substrat bzw. Nährstoffen versorgt wird und zur biologischen Reinigung nichts mehr beiträgt.

Bei der anaeroben Abwasserreinigung tritt weiterhin das Problem auf, daß durch die Flotationswirkung kleiner, sich am Feststoff anhaftender Biogas-Bläschen, die Trägerpartikel zum Aufschwimmen neigen. Die sich dadurch auf der Flüssigkeitsoberfläche ausbildende Feststoffschicht läßt sich durch Umpumpen und durch die üblichen Rührsysteme in der Regel nicht mehr rezirkulieren. Dagegen werden bei einer Begasung der Flüssigkeit die am Feststoff anhaftenden Mikroblasen zur Koaleszenz mit den beim Begasen erzeugten größeren Gasblasen veranlaßt, so daß ein Aufschwimmen des Feststoffes vermieden werden kann.

Der Erfindung liegt die Aufgabe zugrunde, in einem Wirbelbettreaktor die Bewegung der Trägerkörper für die Biokatalysatoren auf möglichst energetisch günstige Weise zu bewerkstelligen.

Diese Aufgabe wird bei einem Wirbelbettreaktor mit Begasungseinheiten zur Erzeugung von Umlaufströmungen und einem Rückhaltesystem für die Trägerpartikel erfindungsgemäß dadurch gelöst, daß über dem Reaktorboden in der Nähe der Berührungsebene von zwei benachbarten Strömungsbereichen gerade langgestreckte Begasungseinheiten mit Gasaustrittsöffnungen parallel zueinander derart angeordnet sind, daß jeweils zwei benachbarte spiegelsymmetrische Umlaufsströmungen erzeugt werden und daß eine Steuervorrichtung zur wechselseitigen Beaufschlagung der Begasungseinheiten vorgesehen ist. Die aus der wechselseitigen Beaufschlagung resultierende Teilbegasung des Reaktors führt zu einer sequentiellen Umschichtung des Feststoffes.

Vorzugsweise beträgt der Abstand d der Begasungseinheiten das 0,1- bis 0,25-fache der Reaktorabmessung D senkrecht zu den Begasungseinheiten.

Eine Begasungseinheit besteht vorteilhaft aus einer Vielzahl von dicht nebeneinander angeordneten Gasaustrittsöffnungen, Sinterkörpern oder Injektoren in einer linien- oder bandförmigen Anordnung.

Ferner hat es sich als günstig erwiesen, wenn zwischen den Begasungseinheiten keilförmige Einbauten mit einem Leitblech angeordnet sind.

Das Rückhaltesystem besteht zweckmäßig aus einem in den Reaktor eingebauten oder außerhalb des Reaktors angeordneten Sedimentationsabscheider oder aus einem Spaltsieb.

Optimale Strömungsverhältnisse werden dann erreicht, wenn die Füllhöhe des Wirbelbettreaktors etwa gleich der maximalen Abmessung einer Umlaufströmung ist. Dies bedeutet, daß das Verhältnis von Füllhöhe zu Länge des Beckens etwa 0,5 betragen sollte. Für den Fall, daß von der Problemstellung her längere Becken eingesetzt werden müssen, ist es zweckmäßig, mit mehr als zwei Umlaufströmungen zu arbeiten. Im Wirbelbettreaktor müssen dann mehrere (>2) Begasungseinheiten, jeweils paarweise zusammengefaßt, modulartig in Längsrichtung hintereinander angeordnet werden.

Erfolgt eine ständige Begasung, so bilden sich mindestens zwei Zirkulationsströmungen aus, durch die die Feststoffpartikel bereits mit niedrigeren Gasgeschwindigkeiten als bei einer einheitlichen Flächenbegasung aufgewirbelt werden. Hierbei ist entscheidend, wo der Gaseintrag erfolgt. Die energetisch günstigste Lösung ergibt sich überraschenderweise, wenn die Gaszufuhr in der Nähe der Berührungsebene der beiden benachbarten Strömungsbereiche erfolgt. Im Vergleich zur Flächenbegasung werden hierbei etwa um 75 % niedrigere Gasgeschwindigkeiten zum Aufwirbeln benötigt.

Durch den Einbau der obengenannten strömungsführenden Einbauten zwischen den Begasungseinheiten ist eine weitere Verbesserung möglich. Auf diese Weise konnte die Gasgeschwindigkeit auf nur noch 5 % der für die Flächenbegasung erforderlichen Gasgeschwindigkeit abgesenkt werden.

Erfolgt nur eine Teilbegasung des Beckens, so entsteht im begasten Bereich eine intensive Bewegung, so daß dort der Feststoff aufgewirbelt wird, während im unbegasten Bereich nur eine geringe Bewegung stattfindet, so daß dort der größte Teil des Feststoffes ruht. Nach einiger Zeit ist festzustellen, daß aus der Zone intensiver Bewegung allmählich ein Feststofftransport in die Zone geringer Bewegung erfolgt, der sich dort ablagert. Dadurch verringert sich der Feststoffgehalt in der begasten Beckenhälfte, so daß der hier verbleibende Feststoff mit einer noch geringeren Gasgeschwindigkeit bewegt werden kann. Dieser Effekt ist besonders ausgeprägt, wenn die Ablagerung und Rückhaltung des Feststoffes in der unbegasten Beckenhälfte durch Leitbleche unterstützt wird.

Aufgrund dieses Sachverhaltes eröffnet sich eine weitere energietechnisch effiziente Möglichkeit der Begasung, die darin besteht, daß nur eine Begasungseinheit mit Gas beaufschlagt wird und nach einer gewissen Zeit die Begasung auf die andere Einheit umgeschaltet wird (wechselnde Begasung). Bei der wechselnden Begasung erfolgt die Umschaltung auf die andere Begasungseinheit zweckmäßig erst dann, wenn die Feststoffpartikel in den begasten Reaktorabschnitten völlig aufgewirbelt sind. Die Umschaltzeit ist dabei abhängig von dem Verhältnis der aufgewendeten Gasleistung und der in Bewegung zu bringenden Feststoffmasse.

Im folgenden wird ein Ausführungsbeispiel der Erfindung anhand von Zeichnungen näher erläutert. Es zeigen:

Fig. 1 schematisch eine Seitenansicht des Wirbelbettreaktors mit Umlaufabscheider,

Fig. 2 eine Draufsicht auf den Reaktor nach Figur 1 und

Fig. 3 einen Schnitt X-X nach Figur 2 (Begasungsrohr).

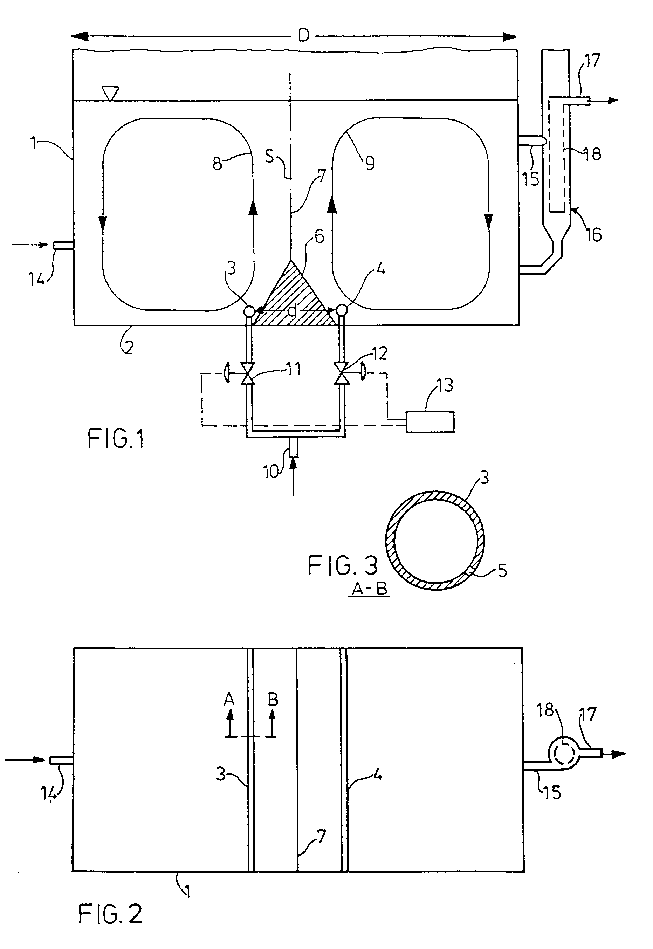

Der Reaktor gemäß Figur 1 besteht aus einem quadratischen Behälter 1 von 11 m Seitenlänge und 6 m Höhe mit einem ebenen Boden 2. Dicht über dem Behälterboden 2 sind zwei aus Gasverteilerrohren bestehende Begasungseinheiten 3 und 4 angeordnet. Die Gasverteiler bestehen aus langgestreckten geraden Rohren, die im Abstand von 230 cm voneinander und 35 cm über dem Boden 2 montiert sind. Die Gasverteilerrohre 3 und 4 sind im Abstand von 5 cm mit Bohrungen 5 von 3 mm ⌀ versehen, Diese Bohrungen 5 stellen die Gasaustrittsöffnungen dar. Zwischen den Begasungseinheiten 3 und 4 befindet sich ein Keil 6 mit einer Basis von 200 cm und einer Höhe von 170 cm. Die Spitze des Keils 6 läuft in ein Leitblech 7 aus, das eine Höhe von 130 cm aufweist.

Die Begasungseinheiten 3 und 4 sind spiegelbildlich zur Symmetrieebene S des Reaktors angeordnet. Die aus den Gasverteilerrohren 3 und 4 in das Abwasser austretenden Gasblasen erzeugen zwei benachbarte spiegelsymmetrische Umlaufsströmungen 8 und 9, Die Ausbildung dieser gegenläufigen Zirkulationsströmungen wird durch die Einbauten 6 und 7 gefördert.

Die Gasverteilerrohre 3 und 4 sind mit der Hauptgasleitung 10 verbunden und können über die Ventile 11 und 12 getrennt mit Gas beaufschlagt werden. Zu diesem Zweck sind die Ventile 11 und 12 mit einer Steuereinheit 13 verbunden, die insbesondere eine Umschaltung der Gaszufuhr zwischen den Begasungseinheiten 3 und 4 erlaubt und mit deren Hilfe eine wechselnde Begasung der beiden Reaktorhälften realisiert werden kann.

Im Reaktor befinden sich 25 Vol.-% kohlegefüllte Polyurethanschaumstoffpartikel, die mit Bakterien zur Abwasserreinigung bewachsen sind. Die mittlere Größe der Partikel beträgt etwa 4 mm und ihre Dichte in gewässertem Zustand 1040 kg/m$^3$. Durch eine Gasmenge von nur 320 m$^3$/h, was einer Gasleerrohrgeschwindigkeit von 2 m/h und einer spezifischen Gasleistung von 5,5 Watt/m$^3$ entspricht, können die Trägerkörper in Bewegung gehalten werden.

Bei der wechselnden Begasung wird der Feststoff in einer Taktzeit von etwa 40 Min, zu 80 % von der begasten Beckenhälfte auf die unbegaste Hälfte verlagert, so daß für etwa 80 % des Feststoffes eine Ruhezeit von höchstens 40 Min. zu veranschlagen ist. Durch Steigerung der Gasgeschwindigkeit auf z.B. 4 m/h läßt sich diese Ruhezeit auf ca. 8 Min, reduzieren. Bei einer weiteren Steigerung auf 6 m/h erfolgt schließlich die Aufwirbelung und Verlagerung des Feststoffes in weniger als 1 Min. Durch die Veränderung der Gasgeschwindigkeit läßt sich der Bewegungszustand der Katalysatoren an die jeweiligen Erfordernisse einer Abwasserreinigungsanlage anpassen.

Der Abwasserstrom, der über den Stutzen 14 in den Wirbelbettreaktor 1 einströmt, verläßt den Reaktor über den Auslaufstutzen 15 mit dem daran anschließenden Rückhaltesystem 16 mit Ablauf 17. Als Rückhaltesystem kann z.B. ein Umlaufabscheider mit eingebautem Spaltsieb 18 verwendet werden. Durch die tangentiale Einmündung 15 des Abwasserstromes wird am Spaltsieb 18 eine intensive Flüssigkeitsströmung erzeugt, so daß bei einem Abwasserdurchsatz von 125 m$^3$/h die erforderliche Siebfläche nur etwa 0,5 m$^2$ betragen muß. Spaltsiebe, die so aufgebaut sind, daß der engste Querschnitt des Siebes sich nur über eine geringe Tiefe erstreckt und daran anschließend sich der Strömungskanal erweitert, erwiesen sich für die Feststoffpartikelrückhaltung als besonders geeignet.

Die beschriebene Begasung ist gleichermaßen für Wirbelbettreaktoren in aerober und anaerober Betriebsweise geeignet. Bei aerobem Betrieb wird Luft bzw. ein Sauerstoff-Luft-Gemisch in die Hauptgasleitung eingespeist. Dagegen führt man bei der anaeroben Betriebsweise der Hauptgasleitung 10 Biogas zu, das bei einem anaeroben biologischen Abbau im Reaktor 1 erzeugt wird.

Die Vorteile der Erfindung liegen:
a) in der Einsparung von Rührwerken zur Aufwirbelung des Abwassers mit den darin suspendierten Trägerkörpern,
b) einer energietechnisch optimierten Aufwirbelung und Durchmischung im Reaktor,
c) einer schonenden Behandlung der Trägerkörper und der daran anhaftenden Biomasse im Sinne einer Minimierung von Abrieb und mechanischer Ablösung und
d) in der Vermeidung von aufschwimmenden Trägern.

**Patentansprüche**

1. Wirbelbettreaktor zur biologischen Reinigung von Abwasser mit Trägerpartikeln für Biokatalysatoren, Begasungseinheiten zur Erzeugung von Umlaufströmungen und einem Rückhaltesystem für die Trägerpartikel, dadurch gekennzeichnet, daß über dem Reaktorboden (2) in der Nähe der Berührungsebene (7) von zwei benachbarten Strömungsbereichen gerade langgestreckte Begasungseinheiten (3, 4) mit Gasaustrittsöffnungen (5) parallel zueinander derart angeordnet sind, daß jeweils zwei benachbarte, spiegelsymmetrische Umlaufströmungen (8, 9) erzeugt werden, und daß eine Steuervorrichtung (13) zur wechselseitigen Beaufschlagung der Begasungseinheiten (3, 4) mit Gas vorgesehen ist.

2. Wirbelbettreaktor nach Anspruch 1, dadurch gekennzeichnet, daß der Abstand d der Begasungseinheiten (3, 4) 0,1 bis 0,25 der Reaktorabmessung D senkrecht zu den Begasungseinheiten beträgt.

3. Wirbelbettreaktor nach Anspruch 1 bis 2, dadurch gekennzeichnet, daß eine Begasungseinheit (3, 4) aus einer Vielzahl von dicht nebeneinander angeordneten Gasaustrittsöffnungen (5), Sinterkörpern oder Injektoren in linien- oder bandförmiger Anordnung besteht.

4. Wirbelbettreaktor nach Anspruch 1 bis 3, dadurch gekennzeichnet, daß zwischen den Begasungseinheiten (3, 4) keilförmige Einbauten (6) mit einem Leitblech (7) angeordnet sind.

5. Wirbelbettreaktor nach Anspruch 1 bis 4, dadurch gekennzeichnet, daß als Rückhaltesystem (16) ein Sedimentationsabscheider oder Spaltsieb (18) in- oder außerhalb des Reaktors (1) angeordnet ist.

**Claims**

1. A fluidized-bed reactor for the biological treatment of wastewater comprising carrier particles for biocatalysts, aeration units for producing circulation flows and a retaining system for the carrier particles, characterized in that straight elongate aeration units (3,4) with gas outlet openings (5) are arranged parallel to one another above the base (2) of the reactor in the vicinity of the plane (7) of contact between two adjacent flow regions in such a way that two adjacent mirror-symmetrical circulation flows (8,9) are produced and in that a control unit (13) is provided for supplying the two aeration units (3,4) with gas.

2. A fluidized bed reactor as claimed in claim 1, characterized in that the distance d separating the aeration units (3,4) is between 0.1 and 0.25 times the reactor dimension D perpendicularly of the aeration units.

3. A fluidized bed reactor as claimed in claims 1 and 2, characterized in that the aeration unit (3,4) consists of a plurality of closely adjacent gas outlet openings (5), sintered elements or injectors in a linear or band-like arrangement.

4. A fluidized bed reactor as claimed in claims 1 to 3, characterized in that wedge-shaped fittings (6) with a baffle plate (7) are arranged between the aeration units (3,4).

5. A fluidized bed reactor as claimed in claims 1 to 4, characterized in that a sedimentation separator or split screen (18) is arranged inside or outside the reactor (1) as the retaining system (16).

**Revendications**

1. Réacteur à lit fluidisé destiné à l'épuration biologique des eaux usées, comportant des particules supports pour biocatalyseurs, des unités d'introduction de gaz en vue de la production de courants de circulation et un système de retenue pour les particules supports, caractérisé en ce que sont disposées parallèlement, au-dessus du fond du réacteur (2), à proximité du plan de contact (7) de deux zones de courant voisines, des unités d'introduction de gaz (3, 4) droites, longitudinales, comportant des orifices de sortie de gaz (5), que sont produits respectivement deux courants de circulation (8, 9) symétriques voisins et qu'est prévu un dispositif de commande (13) en vue de l'alimentation alternée en gaz des unités d'introduction de gaz (3, 4).

2. Réacteur à lit fluidisé selon la revendication 1, caractérisé en ce que la distance d entre les unités d'introduction de gaz (3, 4) est égale à 0,1 à 0,25 fois la dimension D du réacteur, perpendiculairement aux unités d'introduction de gaz.

3. Réacteur à lit fluidisé selon les revendications 1 et 2, caractérisé en ce qu'une unité d'introduction de gaz (3, 4) se compose d'une pluralité d'orifices de sortie de gaz (5), de corps frittés ou d'injecteurs disposés à proximité directe les uns des autres, selon une disposition linéaire ou en forme de bande.

4. Réacteur à lit fluidisé selon les revendications 1 à 3, caractérisé en ce que sont disposées entre les unités d'introduction de gaz (3, 4) des chicanes cunéiformes (6) comportant une tôle de guidage (7).

5. Réacteur à lit fluidisé selon les revendications 1 à 4, caractérisé en ce qu'est disposé, en guise de système de retenue (16), un séparateur de sédimentation ou un tamis à fentes (18) à l'intérieur ou à l'extérieur du réacteur (1).

FIG.1

FIG. 3
A-B

FIG. 2